# EUROPEAN PATENT APPLICATION

(11) **EP 4 372 051 A1**
(43) Date of publication of application: **22.05.2024**
(21) Application number: 23848371.3
(22) Date of filing: 18.07.2023
(51) Int. Cl.: C08L 67/02, C08K 5/521, C08K 5/5313, C08K 5/3492, C08K 3/34, C08K 3/22, C08G 63/183

(54) **POLYESTER RESIN COMPOSITION, PREPARATION METHOD THEREFOR, AND MOLDED ARTICLE MANUFACTURED THEREFROM**

(30) Priority: 25.08.2022 KR 20220106540; 13.07.2023 KR 20230090997
(71) Applicant: LG Chem, Ltd., Seoul 07336 (KR)
(72) Inventor: LEE, Hyun Seok, Daejeon 34122 (KR); KO, Gun, Daejeon 34122 (KR); SON, Sun Mo, Daejeon 34122 (KR); KONG, Seonho, Daejeon 34122 (KR)
(74) Representative: Goddar, Heinz J.
(86) International application number: PCT/KR2023/010245
(87) International publication number: WO 2024/043533

(57) **Abstract**

The present invention relates to a polyester resin composition, a method of preparing the same, and a molded article manufactured using the same. The polyester resin composition according to the present invention is prepared using specific raw materials, and thus has excellent physical property balance between mechanical properties, electrical properties, fluidity, and flame retardancy. In addition, the polyester resin composition may provide excellent product reliability, heat resistance, and appearance. Due to these advantages, the polyester resin composition may be used instead of a conventional halogen-based flame retardant-containing polyester material.

## Description

### [Technical Field]

### [Cross-Reference to Related Applications]

This application claims priority to Korean Patent Application No. 10-2022-0106540, filed on August 25, 2022, and Korean Patent Application No. 10-2023-0090997, re-filed on July 13, 2023, based on the priority of the above patent, in the Korean Intellectual Property Office, the disclosures of each of which are incorporated herein by reference.

The present invention relates to a polyester resin composition, a method of preparing the same, and a molded article manufactured using the same. More particularly, the present invention relates to a polyester resin composition capable of being used as a substitute for a halogen-containing polyester material due to excellent physical property balance between mechanical properties, electrical properties, fluidity, and flame retardancy by changing raw materials; and capable of providing excellent product reliability, heat resistance, and appearance, a method of preparing the polyester resin composition, and a molded article manufactured using the polyester resin composition.

### [Background Art]

As a conventional material for cooling parts including a computer cooling fan, a composite material prepared by reinforcing a polybutylene terephthalate resin (PBT) with glass fiber is used. This composite material has the advantages of weight reduction and low manufacturing cost.

In particular, flame retardancy is an important factor in developing materials for computer cooling fans. As a specific example, to use the aforementioned composite material as a cooling fan material, a technique for including a non-halogen flame retardant in the composite material is required.

As the non-halogen flame retardant added to a polybutylene terephthalate resin composite material, a metal salt phosphorus flame retardant is mainly used. However, when the metal salt phosphorus flame retardant is used alone, it is difficult to implement mechanical rigidity and flame retardancy equal or superior to those of a halogen material. Therefore, there is a demand for development of materials that can be used instead of halogen-based flame retardants.

### [Related Art Documents]

### [Patent Documents]

Japanese Patent No. 5808253 (Registration date: September 18, 2015)

### [Disclosure]

### [Technical Problem]

Therefore, the present invention has been made in view of the above problems, and it is one object of the present invention to provide a polyester resin composition having the advantages of low manufacturing cost and halogen-free; having excellent mechanical strength; and being capable of implementing excellent physical property balance between electrical properties, fluidity, and flame retardancy.

It is another object of the present invention to provide a molded article manufactured using the polyester resin composition.

The above and other objects can be accomplished by the present invention described below.

### [Technical Solution]

I) In accordance with one aspect of the present invention, provided is a polyester resin composition including a polybutylene terephthalate resin, a polyethylene terephthalate resin, an inorganic filler, an aluminum salt of diethylphosphinic acid, melamine cyanurate, and a phosphate ester,
   wherein an intrinsic viscosity of the polyethylene terephthalate resin is less than an intrinsic viscosity of the polybutylene terephthalate resin;
   the melamine cyanurate is included in an amount of 3.8 % by weight or more based on 100 % by weight in total of the polyester resin composition; or the polyester resin composition includes an anti-dripping agent, a heat stabilizer, a polyethylene-based lubricant, and a hydrolysis suppressor, and the melamine cyanurate is included in an amount of 3.8 % by weight or more based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
   the phosphate ester is included in an amount of 1.6 to 6.9 % by weight based on 100 % by weight in total of the polyester resin composition; or the polyester resin composition includes an anti-dripping agent, a heat stabilizer, a polyethylene-based lubricant, and a hydrolysis suppressor, and the phosphate ester is included in an amount of 1.6 to 6.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor; and
   the inorganic filler includes SiO₂, CaO, and Al₂O₃, wherein an amount of SiO₂ is greater than a total amount of CaO and Al₂O₃.
II) According to I), the polybutylene terephthalate resin and the polyethylene terephthalate resin may each have an intrinsic viscosity (η) of 0.7 to 0.9 dl/g.
III) According to I) or II), the polybutylene terephthalate resin may be included in an amount of 24.8 to 41.7 % by weight based on 100 % by weight in total of the polyester resin composition; or the polyester resin composition may include an anti-dripping agent, a heat stabilizer, a polyethylene-based lubricant, and a hydrolysis suppressor, and the polybutylene terephthalate resin may be included in an amount of 24.8 to 41.7 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
IV) According to I) to III), the polyethylene terephthalate resin may have a melting point of 243 to 256 °C.
V) According to I) to IV), the polyethylene terephthalate resin may be a recycled polyethylene terephthalate resin.
VI) According to I) to V), the recycled polyethylene terephthalate resin may be a resin obtained by processing mineral water bottles.
VII) According to I) to VI), the polyethylene terephthalate resin may be included in an amount of 10 to 25 % by weight based on 100 % by weight in total of the polyester resin composition; or the polyester resin composition may include an anti-dripping agent, a heat stabilizer, a polyethylene-based lubricant, and a hydrolysis suppressor, and the polyethylene terephthalate resin may be included in an amount of 10 to 25 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
VIII) According to I) to VII), the inorganic filler may include 50 to 55 % by weight of SiO₂, 15 to 21 % by weight of Al₂O₃, and 13 to 19 % by weight of CaO.
IX) According to I) to VIII), the inorganic filler may be included in an amount of 20 to 40 % by weight based on 100 % by weight in total of the polyester resin composition; or the polyester resin composition may include an anti-dripping agent, a heat stabilizer, a polyethylene-based lubricant, and a hydrolysis suppressor, and the inorganic filler may be included in an amount of 20 to 40 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
X) According to I) to IX), the aluminum salt of diethylphosphinic acid may be included in an amount of 8.6 to 11.9 % by weight based on 100 % by weight in total of the polyester resin composition; or the polyester resin composition may include an anti-dripping agent, a heat stabilizer, a polyethylene-based lubricant, and a hydrolysis suppressor, and the aluminum salt of diethylphosphinic acid may be included in an amount of 8.6 to 11.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
XI) According to I) to X), the melamine cyanurate may be included in an amount of 3.8 to 5.2 % by weight based on 100 % by weight in total of the polyester resin composition; or the polyester resin composition may include an anti-dripping agent, a heat stabilizer, a polyethylene-based lubricant, and a hydrolysis suppressor, and the melamine cyanurate may be included in an amount of 3.8 to 5.2 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
XII) According to I) to XI), the polyester resin composition may include an anti-dripping agent, a heat stabilizer, a polyethylene-based lubricant, and a hydrolysis suppressor, and each of the anti-dripping agent, the heat stabilizer, the polyethylene-based lubricant, and the hydrolysis suppressor may be included in an amount of 0.1 to 10 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.
XIII) According to I) to XII), the polyester resin composition may have a high-load heat deflection temperature of 190 °C or higher as measured under 1.82 MPa according to ISO 75, and may have a flexural strength of 180 MPa or more and a flexural modulus of 8,000 MPa or more as measured at a rate of 2 mm/min using a 4.0 mm specimen and SPAN 64 according to ISO 178.
XIV) In accordance with another aspect of the present invention, provided is a method of preparing a polyester resin composition, the method including kneading and extruding a polybutylene terephthalate resin, a polyethylene terephthalate resin, an inorganic filler, an aluminum salt of diethylphosphinic acid, melamine cyanurate, and a phosphate ester,
   wherein an intrinsic viscosity of the polyethylene terephthalate resin is less than an intrinsic viscosity of the polybutylene terephthalate resin;
   the melamine cyanurate is included in an amount of 3.8 % by weight or more based on 100 % by weight in total of the polyester resin composition; or the polyester resin composition includes an anti-dripping agent, a heat stabilizer, a polyethylene-based lubricant, and a hydrolysis suppressor, and the melamine cyanurate is included in an amount of 3.8 % by weight or more based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
   the phosphate ester is included in an amount of 1.6 to 6.9 % by weight based on 100 % by weight in total of the polyester resin composition; or the polyester resin composition includes an anti-dripping agent, a heat stabilizer, a polyethylene-based lubricant, and a hydrolysis suppressor, and the phosphate ester is included in an amount of 1.6 to 6.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
   the inorganic filler includes SiO₂, CaO, and Al₂O₃, wherein an amount of SiO₂ is greater than a total amount of CaO and Al₂O₃; and
   the polyethylene terephthalate resin is a recycled resin.
XV) In accordance with yet another aspect of the present invention, provided is a molded article including the above-described polyester resin composition.
XVI) According to XV), the molded article may be a cooling part.

### [Advantageous Effects]

A polyester resin composition according to the present invention has physical property balance between mechanical properties, electrical properties, and flame retardancy at a higher level than a conventional halogen flame retardant polyester material, has excellent processability due to improved fluidity, and is capable of providing a molded article having excellent product reliability and appearance.

That is, a molded article manufactured using the polyester resin composition according to the present invention has excellent physical property balance between mechanical properties, such as tensile strength and flexural strength, and flame retardancy.

In addition, the molded article according to the present invention can be suitably used as a cooling part.

### [Description of Drawings]

FIG. 1 is a flowchart for explaining the process of processing mineral water bottles to prepare a polyethylene terephthalate resin used in examples.
FIG. 2 includes an image (right) of a polyethylene terephthalate resin obtained by the process of FIG. 1 and an image (left) of a virgin PET resin prepared by the DMT method. The DMT method refers to transesterification reaction of dimethyl terephthalate (DMT) and ethylene glycol (EG) known in the art.

### [Best Mode]

Hereinafter, the present invention will be described in more detail to aid in understanding of the present invention.

The terms and words which are used in the present specification and the appended claims should not be construed as being confined to common meanings or dictionary meanings but should be construed as meanings and concepts matching the technical spirit of the present invention in order to describe the present invention in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this disclosure, such ranges are contiguous and include all values from the minimum value to the maximum value of such ranges unless otherwise indicated. Also, when such ranges refer to integers, all integers inclusive from the minimum value to the maximum value are included unless otherwise specified.

In the present disclosure, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all reasonable integers within the scope of a range, such as 10.5 %, 15.5 %, 25.5 %.

As used herein, the "hydrolysis stabilizer" refers to a material added to improve impact stability and crystallization rate controllability, unless otherwise specified.

As used herein, unless otherwise specified, the term "melt flow index" may be a melt flow index measured at 260 °C under a load of 5 kg according to ISO 1133.

In the present disclosure, the content (wt%) of a unit in a polymer, a monomer, or a block may mean the content (wt%) of a derived monomer.

In the present disclosure, the content (wt%) of a unit in a polymer, a monomer, or a block may be measured using measurement methods commonly used in the art to which the present invention pertains, or the content of added monomers may be defined as the content of units in a prepared polymer under the premise that all monomers are polymerized.

The present inventors confirmed that, to use a non-halogen-based polyester material as a material for cooling parts, when a composite material including polybutylene terephthalate to provide the rigidity and flame retardancy of the non-halogen-based polyester material was prepared, when a polyester resin obtained by processing mineral water bottles was included and the type and content of the non-halogen flame retardant were adjusted, physical property balance between mechanical properties, electrical properties, and flame retardancy was excellent, and high rigidity was realized. Based on these results, the present inventors conducted further studies to complete the present invention.

### Polyester resin composition

A polyester resin composition according to one embodiment of the present invention includes a polybutylene terephthalate resin, a polyethylene terephthalate resin, an inorganic filler, an aluminum salt of diethylphosphinic acid, melamine cyanurate, and a phosphate ester.

The polybutylene terephthalate resin and the polyethylene terephthalate resin are crystalline materials, impart moldability to the polyester resin composition including the two resins, and impart flame retardancy to a molded article manufactured using the polyester resin composition.

The polyethylene terephthalate resin may be a recycled resin, as a specific example, a resin obtained by processing mineral water bottles.

### Polybutylene terephthalate resin

The polybutylene terephthalate resin is a crystalline resin and prevents penetration of chemicals from the outside. In addition, since the polybutylene terephthalate resin has a crystallized structure, the flowability of the polyester resin composition including the polybutylene terephthalate resin may be improved during injection molding, thereby improving appearance.

The polybutylene terephthalate resin (PBT) may have a repeat unit represented by Formula 1 below.

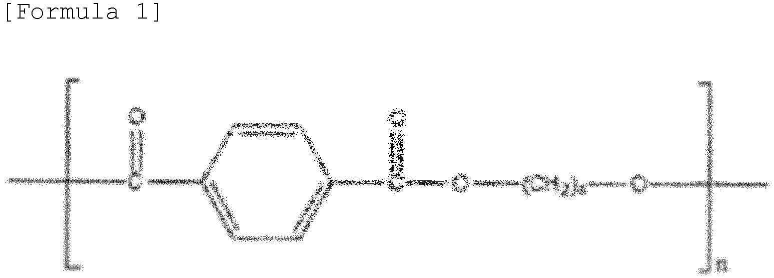

In Formula 1, n represents an average degree of polymerization ranging from 50 to 200.

In one embodiment of the present invention, to increase the impact strength of the polyester resin composition, a copolymer obtained by copolymerizing the polybutylene terephthalate resin and an impact-improving compound such as polytetramethylene glycol, polyethylene glycol, polypropylene glycol, aliphatic polyester, or aliphatic polyamide or a modified polybutylene terephthalate resin obtained by mixing the polybutylene terephthalate resin and the impact-improving compound may be used.

For example, the polybutylene terephthalate resin may have a weight average molecular weight of 10,000 to 80,000 g/mol, 20,000 g/mol to 100,000 g/mol, 30,000 g/mol to 90,000 g/mol, 40,000 g/mol to 80,000 g/mol, or 50,000 g/mol to 70,000 g/mol. Within this range, mechanical properties may be improved.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 pm), the filtered samples are injected into a GPC injector. Then, the molecular weight and molecular weight distribution of the compound may be obtained by comparing the elution time of the sample with the calibration curve of the standard sample. At this time, Infinity II 1260 (Agilient Co.) may be used as measuring instrument, and flow rate may be set to 1.00 mL/min and column temperature may be set to 40.0 °C.

The polybutylene terephthalate resin may be included in an amount of 20 % by weight or more, 20 to 41 % by weight, or 24 to 42 % by weight, preferably 24.8 to 41.7 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the polybutylene terephthalate resin may be included in an amount of 20 % by weight or more, 20 to 41 % by weight, 24 to 42 % by weight, preferably 24.8 to 41.7 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. When the content is less than the range, problems such as an increase in cycle time may occur due to a decrease in solidification rate during injection molding. When the content exceeds the range, as the amount of the recycled polyethylene terephthalate resin is reduced, eco-friendliness may be reduced, and flame retardancy may be reduced.

As a method of preparing the polybutylene terephthalate resin, a polymerization method commonly practiced in the art to which the present invention pertains may be used without particular limitation. When a commercially available polybutylene terephthalate resin meets the definition of polybutylene terephthalate resin according to the present invention, the commercially available polybutylene terephthalate resin may be used in the present invention.

The polybutylene terephthalate resin may have an intrinsic viscosity (η) of 0.7 to 0.9 dl/g or 0.75 to 0.85 dl/g. When the intrinsic viscosity is less than the range, an effect of reinforcing physical properties may decrease, and as a result, an effect of improving non-halogen flame retardancy may be insignificant. When the intrinsic viscosity exceeds the range, moldability may deteriorate, and as a result, the appearance of a part may be poor.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

The intrinsic viscosity of the polybutylene terephthalate resin may be equal to or less than the intrinsic viscosity of a polyethylene terephthalate resin to be described later. Preferably, the intrinsic viscosity of the polybutylene terephthalate resin may be less than the intrinsic viscosity of the polyethylene terephthalate resin. In this case, an effect of reinforcing physical properties and an effect of improving appearance may be provided.

The polybutylene terephthalate resin may be prepared using a method known in the art without particular limitation, or a commercially available product may be used.

### Polyethylene terephthalate resin

In the present disclosure, considering environment-friendliness, the polyethylene terephthalate resin (hereinafter also referred to as "PET") may be preferably a recycled resin.

As the recycled resin, commercially available mineral water bottles or a polyethylene terephthalate resin obtained by processing waste mineral water bottles may be used alone.

The polyethylene terephthalate resin may have an intrinsic viscosity of 0.7 to 0.9 dl/g or 0.7 to 0.8 dl/g. When the intrinsic viscosity is less than the range, an effect of reinforcing physical properties may decrease. When the intrinsic viscosity exceeds the range, moldability may deteriorate, and the appearance of a part may be poor.

The polyethylene terephthalate resin may have a repeat unit represented by Formula 2 below as a basic structure.

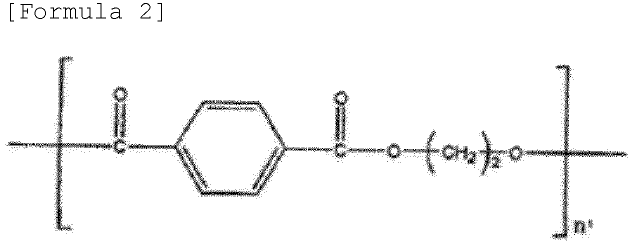

In Formula 2, n' represents an average degree of polymerization ranging from 40 to 160.

The polyethylene terephthalate resin may be prepared using a method known in the art without particular limitation. The polyethylene terephthalate resin may have a melting point of 243 °C or higher, as a specific example, 243 to 256 °C. In this case, the melt flow index of the polyester resin composition may be improved, thereby improving moldability.

The polyethylene terephthalate resin may have a crystallization temperature (Tm) of 243 °C or higher, as a specific example, 243 to 258 °C. In this case, the melt flow index of the polyester resin composition may be improved, thereby improving moldability.

In the present disclosure, methods known in the art may be used to measure a melting point and a crystallization temperature. For example, the melting point and the crystallization temperature may be determined based on heat absorption peaks using a differential scanning calorimeter (DSC).

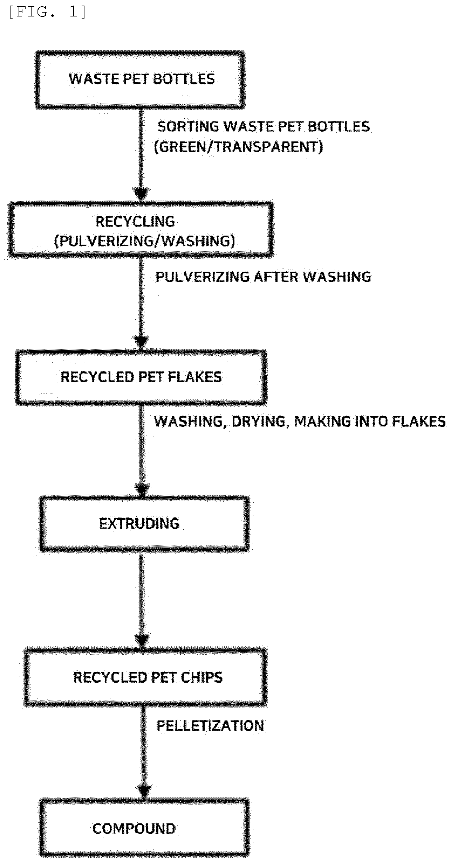

In one embodiment of the present invention, for example, the polyethylene terephthalate resin may be chips obtained by processing mineral water bottles into flakes according to the process flowchart of FIG. 1 to be described later.

The mineral water bottle may be a resin including polyethylene terephthalate without being limited thereto, and may be polyethylene terephthalate prepared by condensation polymerization of terephthalic acid and ethylene glycol.

Considering eco-friendliness, waste mineral water bottles are preferably used as the mineral water bottles.

FIG. 1 below is a process flowchart for explaining a process of preparing polyethylene terephthalate chips using waste mineral water bottles in an embodiment to be described later.

Referring to FIG. 1 below, a sorting process is performed to classify waste mineral water bottles into colored bottles and transparent bottles. In this case, the sorting may be performed by visual observation.

Next, pulverization is performed using a cutter. Specifically, first, bottles weighing around 200 kg are cleaned. Then, considering the washing, drying, and flake processes, the bottles are preferably pulverized to a size of 3 to 5 mm, but the present invention is not limited thereto. Within this range, by increasing the surface area of the pulverized PET pieces, drying efficiency in the subsequent drying process may be increased, and a uniform reaction between a thickener and the pulverized pieces may be ensured.

Next, the first pulverized pieces are further cleaned, followed by drying and flake processing.

In the drying, moisture is removed from the pulverized pieces, then a thickener is mixed, followed by primary drying. Then, secondary drying is performed, and then dehumidification treatment may be performed.

In the primary drying step, drying is performed under 120 to 140 conditions so that the water content of the pulverized PET pieces is about 1,000 ppm, and a thickener and the pulverized PET pieces are mixed evenly for a uniform reaction.

For example, in the primary drying step, the sorted pulverized PET pieces and the thickener are put into a friction dryer, and the pulverized PET pieces are dried at a dryer temperature of 140 °C and an agitator speed of 50 rpm for about 2 hours while continuously passing 120 to 140 °C high-temperature air through the dryer so that the water content of the pulverized PET pieces is 1,000 ppm.

As the thickener, a compound that causes a thickening reaction without melting at around 140 °C, which is a primary drying temperature described above, and 165 °C, which is a secondary drying temperature to be described later, may be used without limitation. As a specific example, a carbodiimide-based thickener may be used.

The carbodiimide-based thickener is a known compound, and examples of the carbodiimide-based thickener include carbodiimides and polycarbodiimides. The content of the thickener is appropriately adjusted according to intrinsic viscosity suitable for a desired product. For example, based on the total weight of PET, the thickener may be added in an amount of 0.25 to 0.75 % by weight.

The dehumidification treatment is performed to prevent hydrolysis of PET in the reaction mixture. Specifically, the dehumidification treatment is a process of obtaining dried PET by performing drying and dehumidification so that the water content of the PET reaction mixture is less than 50 ppm.

In the present disclosure, unless otherwise defined, ppm is based on weight.

According to the dehumidification process, the PET reaction mixture is put into a drying hopper, and hot air dehumidified in a dehumidifier is injected into the hopper under the conditions of a dryer temperature of 165 °C, a dew point of -60 to -40 °C, and a residence time of about 5 hours to perform drying and dehumidification. This process is performed until the water content of the PET reaction mixture is less than 50 ppm.

The flake processing is a process of sorting sizes of about 5 mm using an optical flake sorter, and the resulting sorted products are extruded in the temperature range of 200 to 270 °C.

Specifically, the extrusion is a process of obtaining a PET melt product by additionally adding a thickener to dried and dehumidified PET flakes having a water content of less than 50 ppm, performing melt extrusion at a melting temperature, and physically removing foreign substances from the melt extrudate.

Since the additionally added thickener has a lower melting temperature than the above-mentioned thickener, the thickener may not be used because the thickener is melted at the dryer temperature of 140 °C and the dryer temperature of 165 °C in the process to be described later.

For reference, when the additional thickener and the aforementioned thickener are added at the same time, the additional thickener melts in the dryer, and thus the primary drying process and the dehumidification process may not be performed. Accordingly, the additional thickener should be added separately during the extrusion process in which the PET reaction mixture is melted.

As the additional thickener, compounds known as oxazoline-based thickeners may be used. For example, oxazoline, 1,3-phenylene bisoxazoline, and the like may be used. For example, based on a total weight of the PET melt product, the thickener may be added in an amount of 0.1 to 0.75 % by weight.

In addition, by adjusting the mixing ratio of the thickener used in the primary drying process and the thickener used in the extrusion process, intrinsic viscosity suitable for manufacturing a desired product may be provided.

For example, according to the extrusion process, dried and dehumidified PET matter having a water content of less than 50 ppm and the above-mentioned additional thickener are introduced into an extruder, and melt extrusion is performed at a melt temperature of 275 to 280 °C under a maximum melt pressure of 110 bar.

The melted extrudate is passed through a 20 micron SUS filter at a vacuum degree of 10 mbar to remove foreign substances and obtain a high-purity PET melt product, and then cold cutting is performed to obtain a PET product of a certain shape.

According to the molding process, the high-purity PET melt product is cut into spherical PET (hereinafter also referred to as PET chips) having a diameter of 2.8 mm in 90 °C circulating water at a die plate temperature of 320 °C and a blade rotation speed of 3,200 rpm.

In the PET chip manufacturing process, to provide a desired intrinsic viscosity by crystallizing the surface of the PET chip using residual heat in the molding process, temperature conditions need to be controlled to retain residual heat above 140 °C.

In the PET chip manufacturing process, as the PET chips pass through an in-line crystallizer equipped with a vibrating conveyor while staying for about 15 minutes, the surfaces of the PET chips are crystallized. When dried without surface crystallization, the agglomeration problem may be solved.

When necessary, the obtained recycled PET chips are compounded with talc, a coupling agent, or glass fiber to obtain a recycled resin.

The polyethylene terephthalate resin may be included in an amount of 10 % by weight or more, 10 to 40 % by weight, 10 to 30 % by weight, or 10 to 25 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the polyethylene terephthalate resin may be included in an amount of 10 % by weight or more, 10 to 40 % by weight, 10 to 30 % by weight, or 10 to 25 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. When the content is less than the range, as the amount of the recycled polyethylene terephthalate resin is reduced, eco-friendliness may be reduced. When the content exceeds the range, an effect of reinforcing physical properties may be insignificant, and moldability may deteriorate. As a result, the appearance of a part may be poor.

### Inorganic filler

The inorganic filler of the present invention may include SiO₂, CaO, and Al₂O₃. In this case, the amount of SiO₂ may be greater than the total amount of CaO and Al₂O₃. Preferably, glass fiber in which the amount of SiO₂ is greater than the total amount of CaO and Al₂O₃ may be used.

As the glass fiber according to one embodiment of the present invention, glass fiber capable of improving mechanical properties by reinforcing the rigidity of a molded article manufactured using the polyester resin composition of the present invention may be used.

For example, the inorganic filler according to one embodiment of the present invention may include 50 to 55 % by weight of silica. As a specific example, the inorganic filler may be glass fiber including 50 to 55 % by weight of silica, 15 to 28 % by weight of alumina, and 13 to 26 % by weight of calcium oxide, preferably glass fiber including 50 to 55 % by weight of silica, 15 to 21 % by weight of alumina, and 13 to 19 % by weight of calcium oxide. When glass fiber satisfying the content range is used, a thermoplastic resin composition having excellent physical property balance between processability, specific gravity, and mechanical properties may be secured, and a molded article having high heat resistance, rigidity, and toughness may be manufactured using the thermoplastic resin composition.

In the present disclosure, the content of silica in a reinforcing agent may be measured by X-Ray Fluorescence spectrometry (XRF).

The glass fiber of the present invention may have a circular cross-section or a flat cross-section. When the glass fiber satisfies the range and has the cross-section, high rigidity, weight reduction, and appearance may be secured.

For example, the glass fiber may have an aspect ratio of 1:1 to 1:4, as a specific example, 1:1 to 1:3, more specifically 1:1. Here, the aspect ratio is expressed as the ratio (L/D) of length (L) to diameter (D). Within this range, the thermoplastic resin composition of the present invention may have high rigidity and toughness, and the elongation and surface appearance thereof may be improved. As a specific example, the glass fiber may have an aspect ratio of 1:3 to 1:4, more specifically 1:4. Within this range, in addition to high rigidity and toughness, a product advantageous in terms of flatness, deformation, and orientation may be provided.

In the present disclosure, diameter and length may be measured using a scanning electron microscope (SEM). Specifically, 20 inorganic fillers are selected using a scanning electron microscope, the diameter and length of each inorganic filler are measured using an icon bar capable of measuring diameter, and then the average diameter and average length are calculated.

For example, the average diameter may be 10 to 13 pm, as a specific example, 10 to 11 µm, and the average length may be 2.5 to 6 mm, as a specific example, 3 to 4 mm. Within this range, processability may be improved, thereby improving the tensile strength of a molded article manufactured by molding the thermoplastic resin composition of the present invention.

The cross-section of the glass fiber may have a circular, rectangular, elliptical, dumbbell, or rhombic shape.

In one embodiment of the present invention, the glass fiber may be used in combination with other inorganic fibers, and the inorganic fibers may include one or more selected from carbon fiber, basalt fiber, and natural fibers such as kenaf and hemp.

In one embodiment of the present invention, during fiber manufacturing or post-processing, the glass fiber may be treated with a sizing agent, such as a lubricant, a coupling agent, and a surfactant.

The lubricant is mainly used to form a good strand when manufacturing glass fiber, and the coupling agent plays a role in enabling good adhesion between glass fiber and a base resin. When the types of base resin and glass fiber are properly selected, excellent physical properties may be imparted to the thermoplastic resin composition.

The coupling agent may be applied directly to glass fiber or added to an organic matrix. To sufficiently exhibit the performance of the coupling agent, the content thereof may be appropriately selected.

Examples of the coupling agent include amine-based coupling agents, acrylic coupling agents, and silane-based coupling agents, preferably silane-based coupling agents.

As a specific example, the silane-based coupling agents may include γ-aminopropyl triethoxysilane, γ-aminopropyl trimethoxysilane, N-(beta-aminoethyl) γ-aminopropyl triethoxysilane, γ-methacryloxypropyl triethoxysilane, γ-glycidoxypropyl trimethoxysilane, and β-(3,4-epoxyethyl) γ-aminopropyl trimethoxysilane.

The inorganic filler of the present invention may be included in an amount of 10 to 38 % by weight, 15 to 38 % by weight, 15 to 35 % by weight, 20 to 40 % by weight, or 25 to 35 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the inorganic filler may be included in an amount of 10 to 38 % by weight, 15 to 38 % by weight, 15 to 35 % by weight, 20 to 40 % by weight, or 25 to 35 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. When the content is less than the range, cracks may occur on a molded article manufactured using the polyester resin composition including the inorganic filler. When the content exceeds the range, the dimensions of a molded article manufactured using the polyester resin composition including the inorganic filler may be outside the predetermined range, or appearance may be poor.

### Polyester resin composition

The polyester resin composition according to one embodiment of the present invention is a non-halogen flame retardant material for providing flame retardancy and mechanical properties equal or similar to those of a halogen flame retardant material, and may further include additives such as an aluminum salt of diethylphosphinic acid, melamine cyanurate, and a phosphate ester.

### Aluminum salt of diethylphosphinic acid

Specifically, the aluminum salt of diethylphosphinic acid is included as a non-halogen flame retardant to provide a flame retardant effect required during injection molding of the polyester resin composition. In addition, the aluminum salt of diethylphosphinic acid may provide a sufficient flame retardant effect even when the polyester resin composition is stored for a long time.

The aluminum salt of diethylphosphinic acid may improve the flame retardancy of the composition by forming char on the polymer surface.

The aluminum salt of diethylphosphinic acid may be included in an amount of 9 % by weight or more, 9 to 15 % by weight, 9 to 12 % by weight, or 8.6 to 11.9 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the aluminum salt of diethylphosphinic acid may be included in an amount of 9 % by weight or more, 9 to 15 % by weight, 9 to 12 % by weight, or 8.6 to 11.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. Within this range, char may be formed on the polymer surface, thereby improving the flame retardancy of the composition.

In one embodiment of the present invention, as the aluminum salt of diethylphosphinic acid, a commercially available product may be used.

### Melamine cyanurate

The melamine cyanurate may improve flame retardancy by generating an inert gas.

The melamine cyanurate may be included in an amount of 3.8 % by weight or more, 3.8 to 10 % by weight, 3.8 to 5.8 % by weight, or 3.8 to 5.2 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the melamine cyanurate may be included in an amount of 3.8 % by weight or more, 3.8 to 10 % by weight, 3.8 to 5.8 % by weight, or 3.8 to 5.2 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. Within this range, the flame retardancy of the composition may be improved by sufficiently generating an inert gas.

In one embodiment of the present invention, as the melamine cyanurate, a commercially available product may be used.

### Phosphate ester

Specifically, the phosphate ester may be included as a non-halogen flame retardant to generate an inert gas and improve flame retardancy.

The phosphate ester may be included in an amount of 1.6 % by weight or more, 1.6 to 6.9 % by weight, 2 to 6.9 % by weight, or 2 to 6.5 % by weight based on 100 % by weight in total of the polyester resin composition including a polybutylene terephthalate resin, a polyethylene terephthalate resin, an inorganic filler, an aluminum salt of diethylphosphinic acid, melamine cyanurate, and a phosphate ester; or the polyester resin composition may include an anti-dripping agent, a heat stabilizer, a polyethylene-based lubricant, and a hydrolysis suppressor, and the phosphate ester may be included in an amount of 1.6 % by weight or more, 1.6 to 6.9 % by weight, 2 to 6.9 % by weight, or 2 to 6.5 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. Within this range, the flame retardancy of the composition may be improved by sufficiently generating an inert gas.

In one embodiment of the present invention, as the phosphate ester, a commercially available product may be used.

### Additives

According to one embodiment of the present invention, four or more additives selected from an anti-dripping agent, a low-viscosity polyethylene-based lubricant, a hydrolysis suppressor, a phenolic antioxidant, and a phosphite antioxidant may be further included.

In one embodiment of the present invention, the polyester resin composition may include an anti-dripping agent, a heat stabilizer, a polyethylene-based lubricant, and a hydrolysis suppressor, and each of the anti-dripping agent, the heat stabilizer, the polyethylene-based lubricant, and the hydrolysis suppressor may be included in an amount of 0.1 to 10 % by weight, 0.1 to 7 % by weight, or 0.1 to 5 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor. Within this range, the properties of the additives may be effectively expressed without affecting the physical properties of the resin composition.

An anti-dripping agent capable of imparting an anti-dripping effect to a polyester resin composition including the same may be used in the present invention without particular limitation. As a specific example, when using a tetrafluoroethylene resin, flame retardancy may be improved through an anti-dripping effect, so the tetrafluoroethylene resin may be preferably used.

In one embodiment of the present invention, as the anti-dripping agent, a commercially available product may be used.

Based on 100 % by weight in total of a polybutylene terephthalate resin, a polyethylene terephthalate resin, an inorganic filler, an aluminum salt of diethylphosphinic acid, melamine cyanurate, and an anti-dripping agent, the anti-dripping agent may be included in an amount of 0.01 to 5 % by weight, 0.1 to 3 % by weight, 0.1 to 2 % by weight, 0.1 to 1 % by weight, or 0.1 to 0.5 % by weight. When the content of the anti-dripping agent exceeds the range, the moldability of a molded article manufactured using the polyester resin composition including the anti-dripping agent may be degraded, resulting in poor quality. When the content of the anti-dripping agent is less than the range, an anti-dropping effect may not be sufficiently expressed.

The lubricant may be olefin-based wax, and serves to help the polyester resin composition maintain excellent releasability and injection properties.

A lubricant may be used in the present invention without particular limitation as long as the lubricant may secure the ease of ejection and flowability of an injection screw used to manufacture a molded article using a polyester resin composition including the lubricant.

The lubricant may be used in the present invention, and any lubricant may be used as long as the lubricant may secure the properties, without particular limitation. Preferably, the lubricant may include olefin-based wax, more preferably polyethylene-based wax.

In one embodiment of the present invention, as the polyethylene-based wax, a commercially available product may be used.

Based on 100 % by weight in total of a polybutylene terephthalate resin, a polyethylene terephthalate resin, an inorganic filler, an aluminum salt of diethylphosphinic acid, melamine cyanurate, and a lubricant, the lubricant may be included in an amount of 0.01 to 5 % by weight, 0.1 to 3 % by weight, 0.1 to 2 % by weight, 0.1 to 1 % by weight, or 0.1 to 0.5 % by weight. Within this range, excellent releasability and injection properties may be provided.

In one embodiment of the present invention, various known hydrolysis suppressors may be used as the hydrolysis suppressor within the range that does not adversely affect the polyester resin composition of the present invention. Representative commercially available hydrolysis suppressors include inorganic phosphate compounds such as sodium phosphate monobasic represented by Formula of NaH₂PO₄.

Based on 100 % by weight in total of a polybutylene terephthalate resin, a polyethylene terephthalate resin, an inorganic filler, an aluminum salt of diethylphosphinic acid, melamine cyanurate, and a hydrolysis suppressor, the hydrolysis suppressor may be included in an amount of 0.01 to 5 % by weight, 0.1 to 3 % by weight, 0.1 to 2 % by weight, 0.1 to 1 % by weight, or 0.1 to 0.5 % by weight. Within this range, excellent hydrolysis resistance and stability may be achieved.

As the phenolic antioxidant and the phosphite antioxidant, phenolic antioxidants and phosphite antioxidants capable of reinforcing a thermal stabilization effect and preventing high-temperature deformation of a polyester resin composition or molded article may be used without particular limitation.

As the heat stabilizer, heat stabilizers capable of securing the properties may be used without particular limitation. As described above, by using the phenolic antioxidant, the heat stability of polymers included in the polyester resin composition may be further improved. Specifically, when molding the polyester-based composition, the phenolic antioxidant may protect polymers by removing radicals.

In the present disclosure, a hindered phenolic stabilizer having a crystallization temperature (Tm) of 110 to 130 °C may be included. As a specific example, the hindered phenolic stabilizer may include tetrakis[ethylene-3-(3,5-di-t-butyl-hydroxyphenyl)propionate], octadecyl 3-(3,5-di-t-butyl-4-hydroxyphenyl)propionate, or a mixture thereof.

As the heat stabilizer, heat stabilizers capable of securing the properties may be used without particular limitation. For example, the phosphite antioxidant (high phenolic antioxidant) may include a phosphite-based stabilizer having a melting temperature (Tm) of 180 to 240°C. As a specific example, the phosphite antioxidant may include tris(2,4-di-tert-butylphenyl)phosphite, 3,9-bis(2,6-di-tert-butyl-4- methylphenoxy)-2,4,8,10-tetraoxa-3,9-diphosphaspiro[5.5]undecane, bis(2,4-dicumylphenyl)pentaerythritol diphosphite, or a mixture thereof.

In one embodiment of the present invention, as the phosphite antioxidant, a commercially available product may be used.

Based on 100 % by weight in total of a polybutylene terephthalate resin, a polyethylene terephthalate resin, an inorganic filler, an aluminum salt of diethylphosphinic acid, melamine cyanurate, and a heat stabilizer, the heat stabilizer may be included in an amount of 0.01 to 5 % by weight, 0.01 to 3 % by weight, 0.01 to 2 % by weight, 0.01 to 1 % by weight, or 0.05 to 0.5 % by weight. When the content of the heat stabilizer exceeds the range, stains may be formed on the surface of a molded article manufactured using a polyester resin composition including the heat stabilizer, resulting in poor appearance.

The polyester resin composition may be preferably a polyester resin composition for cooling parts such as the cooling fan of a computer or laptop.

### Method of preparing polyester resin composition

Hereinafter, a method of preparing a polyester resin composition of the present invention will be described. In describing the method of preparing a polyester resin composition, all of the above-described polyester resin composition is included.

For example, the method of preparing a polyester resin composition of the present invention includes a step of feeding a polybutylene terephthalate resin, a polyethylene terephthalate resin, an inorganic filler, an aluminum salt of diethylphosphinic acid, melamine cyanurate, and a phosphate ester into an extruder and performing melt-kneading and extrusion.

For example, in the melt-kneading step, the above-described additives may be included.

For example, the melt-kneading and extrusion step may be performed using one or more selected from a single-screw extruder, a twin-screw extruder, and a Banbury mixer. Preferably, the melt-kneading and extrusion step may be performed by uniformly mixing components using a twin-screw extruder and performing extrusion to obtain a polyester resin composition in extrudate form. In this case, the mechanical properties and thermal characteristics of the polyester resin composition may not deteriorate, and the plating adhesion and appearance thereof may be excellent.

The polyester resin composition according to the present invention may be prepared by a method known in the art. For example, the polyester resin composition may be prepared in the form of an extrudate by a method of melt-extruding a mixture of components and additives in an extruder, and the extrudate may be used to manufacture injection-molded articles and extrusion-molded articles.

In one embodiment of the present invention, the extrudate is extruded at a temperature of 250 to 280 °C or 260 to 270 °C. At this time, the temperature means temperature set in a cylinder.

When performing injection, the temperature of a mold is preferably 40 to 120 °C. When the mold temperature is 40 °C or less, appearance may be poor. When the mold temperature is 120 °C or higher, the extrudate may stick to the mold, reducing releasability and increasing cooling rate. Specifically, the mold temperature may be 60 to 88 °C, 70 to 80 °C, or 72 to 78 °C. Within this range, even when the temperature of a mold into which a melt product containing the polyester-based composition is injected is controlled during injection molding, injection deviation at all points of the molded article may be minimized, thereby improving injection properties and hydrolysis resistance.

For example, the injection process may be performed using an injection machine in which hopper temperature or nozzle temperature is set to 260 to 280 °C.

According to one embodiment of the present invention, when the injection-molded article is manufactured through injection molding, the injection speed of a melt product containing the polyester resin composition may be 30 to 100 mm/s. Specifically, when the injection-molded article is manufactured through injection molding, the injection speed of a melt product containing the polyester resin composition may be 35 to 95 mm/s, 50 to 80 mm/s, or 60 to 70 mm/s. Within this range, when an injection-molded article is manufactured through injection molding, even when the temperature of a mold into which a melt product containing the polyester-based composition is injected is adjusted, injection deviation at all points of the molded article may be minimized, thereby improving injection properties and hydrolysis resistance.

For example, the method of preparing a polyester resin composition according to the present invention includes a step of kneading and extruding a polybutylene terephthalate resin, a polyethylene terephthalate resin, glass fiber, and additives. The polyethylene terephthalate resin is a recycled resin. In this case, the physical property balance between rigidity, processability, and specific gravity may be excellent.

The resin obtained by processing mineral water bottles may be a product obtained by processing an extrudate of mineral water bottles using a polyester resin having an intrinsic viscosity of 0.5 to 0.9 dl/g as a raw material.

According to one embodiment of the present invention, a step of melt-kneading and extruding the resin obtained by processing mineral water bottles may be included.

As a specific example, a step of molding an extrudate of mineral water bottles having an intrinsic viscosity of 0.5 to 0.9 dl/g to obtain a polyethylene terephthalate resin having an intrinsic viscosity of 0.7 to 0.8 dl/g; and a step of melt-kneading and extruding 10 to 37.5 % by weight of the polyethylene terephthalate resin, 26.7 to 54 % by weight of a polybutylene terephthalate resin, and 10 to 43 % by weight of an inorganic filler may be included.

At this time, various molding methods used in the art may be used, and the molding form may be, for example, a chip form in consideration of convenience of use.

In addition, a molded article including the polyester resin composition of the present invention will be described. In describing the molded article including the polyester resin composition of the present invention, all of the above-described polyester resin composition and method thereof is included.

### Molded article

Through sufficient complement between the components of the polyester resin composition of the present invention, the polyester resin composition may be usefully used to manufacture a molded article requiring excellent moldability, mechanical properties, high-load heat deflection temperature, and non-halogen flame retardancy.

For example, the molded article may be a cooling part requiring high heat resistance and excellent injection characteristics.

As another example, the molded article may be a cooling fan for computers.

The molded article of the present invention may be manufactured using methods commonly used in the art. For example, using the melt-kneaded product or extrudate of the polyester resin composition of the present invention or a sheet (plate) obtained by molding the melt-kneaded product or extrudate as a raw material, an injection molding method (injection molding), an injection compression molding method, an extrusion molding method (sheet casting), a press molding method, a pressure molding method, a heat bending method, a compression molding method, a calender molding method, or a rotational molding method may be used.

For example, an extrudate of the polyester resin composition of the present invention may be prepared as follows. A polybutylene terephthalate resin, a recycled polyester resin, an inorganic filler, an aluminum salt of diethylphosphinic acid, melamine cyanurate, a phosphate ester, and additives are fed at 250 rpm and a flow rate (F/R) of 35 kg/h into a main inlet of a twin-screw extruder (ϕ40, L/D: 42, SM Platek equipment) set to 260 °C, an inorganic filler is fed at a flow rate of 15 kg/h into an auxiliary inlet, and then melt-kneading and extrusion are performed to prepare an extrudate.

The extrudate may be put into an injection molding machine to manufacture a molded article.

To measure the physical properties of the polyester resin composition of the present invention, the extrudate may be injected at an injection temperature of 260 °C, a mold temperature of 80 °C, and an injection speed of 30 mm/sec using an injection molding machine (80 tons, ENGEL Co.) to prepare a specimen according to the ISO standard.

For example, the polyester resin composition of the present invention may have a melt flow index of 15 g/10 min or more or 15 to 30 g/10 min as measured according to ISO1133, and may have a specific gravity of 1.5 g/cm³ or more, 1.55 g/cm³ or more, or 1.55 to 1.60 g/cm³ as measured according to ISO1183. In this case, excellent processability may be provided.

In the present disclosure, the melt flow index may be measured at 265°C under a load of 2.16 kg, and the specific gravity may be measured at 23 °C.

In addition, the polyester resin composition of the present invention may have, for example, a high-load heat deflection temperature of 190 °C or higher, 200 °C or higher, 200 to 210 °C, or 202 to 205 °C as measured according to ISO 75. In this case, excellent heat deflection temperature may be provided.

In the present disclosure, the high-load heat deflection temperature may be measured under a high load of 1.82 MPa according to ISO 75.

In addition, for example, when flexural strength and flexural modulus are measured using a 4.0 mm specimen according to ISO 178, the polyester resin composition of the present invention may have a flexural strength of 180 MPa or more, 182 MPa or more, or 182 to 200 MPa and a flexural modulus of 8,000 MPa or more, 9,000 MPa or more, 9,000 to 11,000 MPa, or 9,450 to 11,000 MPa. In this case, excellent flexibility and processability may be provided.

In the present disclosure, the flexural strength and flexural modulus may be measured at a rate of 2 mm/min using SPAN 64 according to ISO 178.

In addition, for example, the polyester resin composition of the present invention may have a tensile strength of 115 MPa or more, 116 MPa or more, or 117 to 135 MPa as measured using a 4.0 mm specimen according to ISO 527-1, and may have a tensile elongation of 1.5 % or more, 2.0 % or more, or 2.4 to 3 % as measured according to ISO 527-2. In this case, high toughness may be provided.

In the present disclosure, the tensile strength and tensile elongation may be measured at 23 °C and a rate of 5 mm/min.

In addition, the polyester resin composition of the present invention may have, for example, a Charpy impact strength of 6.5 kJ/cm² or more, 6.8 kJ/cm² or more, or 6.9 to 7.9 kJ/cm² as measured according to ISO 179/1eA. In this case, excellent impact resistance may be provided.

In the present disclosure, the Charpy impact strength may be measured at 23 °C using a notched specimen.

In addition, the polyester resin composition of the present invention may have, for example, a flame retardancy of V-0 or higher as measured using a specimen having a thickness of 0.8 T according to UB 94 V-test. In this case, excellent flame retardancy may be provided.

Specifically, the molded article may be a cooling part. In particular, the molded article may be a cooling fan for computers requiring thermal characteristics and flame retardancy, but the molded article is not limited to specific products.

In the case of the molded article manufactured using the polyester resin composition according to one embodiment of the present invention, a halogen-free composition is used instead of conventional materials, char and inert gas are formed on the polymer surface to improve flame retardancy, the physical property balance between mechanical properties, thermal characteristics, fluidity, and flame retardancy may be excellent, and product reliability and appearance may be excellent.

In describing the polyester resin composition of the present invention, the method of preparing the same, and the molded article including the same, it should be noted that other conditions or equipment not explicitly described herein may be appropriately selected within the range commonly practiced in the art without particular limitation.

Hereinafter, examples of the present invention will be described in detail so that those skilled in the art to which the present invention pertains can easily practice the present invention. However, the present invention may be implemented in various different forms and is not limited to these embodiments.

### [Examples]

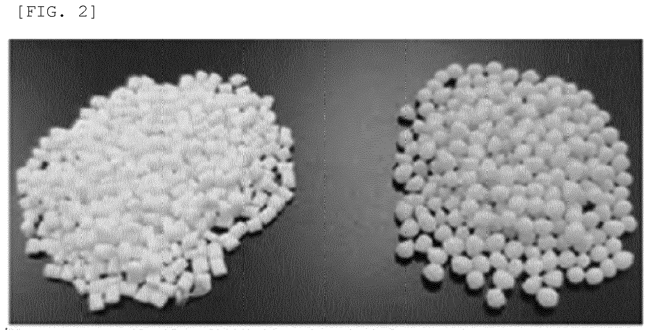

The specifications of each component used in examples are as follows. Here, % means wt%.
(A) Polybutylene terephthalate resin: A polybutylene terephthalate resin having an intrinsic viscosity (IV) of 0.8 dl/g
(B) Recycled polyethylene terephthalate: Homo-type white chips (see the right image of FIG. 2 below) obtained by processing mineral water bottles according to the process flowchart of FIG. 1 below and having an intrinsic viscosity (IV) of 0.7 dl/g
(C) Inorganic filler
   (C-1) Glass fiber (silica: 44 % by weight, alumina: 14 % by weight, and calcium oxide: 36 % by weight) having a diameter of 10 µm and a length of 3 mm
   (C-2) Glass fiber (silica: 52 % by weight, alumina: 18 % by weight, and calcium oxide: 16 % by weight) having a diameter of 10 µm and a length of 3 mm
(D) Flame retardant
   (D-1) Aluminum salt of diethylphosphinic acid
   (D-2) Melamine cyanurate
   (D-3) Phosphate ester: Tetrakis(2,6-dimethylphenyl) 1,3-phenylene bisphosphate
   (D-4) Brominated aromatic carbonate oligomer
   (D-5) Antimony trioxide flame retardant

### <Additives>

(E) Anti-dripping agent: Teflon
(F) Heat stabilizer: An additive obtained by mixing a phenolic antioxidant and a phosphite antioxidant in a ratio of 1:1
(G) Polyethylene-based lubricant: LDPE wax
(H) Hydrolysis suppressor (transesterification inhibitor): Sodium phosphate monobasic (NaH₂PO₄)

### Examples 1 to 4 and Comparative Examples 1 to 7

The raw materials of the polyester resin composition shown in Table 1 below were mixed and extruded to obtain a polyester resin composition in the form of an extrudate having even dispersion. Then, an injection process was performed. Specifically, heat was applied to the extrudate, and the extrudate was injected into a mold frame, followed by cooling to obtain a specimen.

Specifically, each component was added according to the contents shown in Table 1, and melt-kneading was performed in the temperature range of 250 to 280 °C using a twin-screw extruder with L/D = 42 and Φ = 40 mm to obtain a resin composition in extrudate form.

After drying the prepared extrudate at 100 °C for more than 4 hours, the dried extrudate was injected at an injection temperature of 260 to 280 °C, a mold temperature of 80 °C, and an injection speed of 30 mm/s using an 80-ton injection machine (Victory 80, Engel Co.) to prepare a specimen for evaluating mechanical properties.

The physical properties of the prepared specimen having a thickness of 3.2 mm, a width of 12.7 mm, and a marked line section (elongation measurement) of 115 mm were measured in the following manner, and the results are shown in Table 2 below.

**[Table 1]**

| Classi ficati on | Exa mpl e 1 | Exa mpl e 2 | Exa mpl e 3 | Exa mpl e 4 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 |
|---|---|---|---|---|---|---|---|---|---|---|---|
| A | 26. 7 | 28. 7 | 24. 7 | 39. 7 | 43.9 | 49.9 | 24.7 | 28.7 | 30.7 | 29.7 | 22.7 |
| B | 25. | 25. | 25. | 10. | - | - | 25.0 | 25.0 | 25.0 | 25.0 | 25.0 |
| | 0 | 0 | 0 | 0 | | | | | | | |
| C-1 | - | - | - | - | 30.0 | 30.0 | 30.0 | - | - | - | - |
| C-2 | 30. 0 | 30. 0 | 30. 0 | 30. 0 | - | - | - | 30.0 | 30.0 | 30.0 | 30.0 |
| D-1 | 9.0 | 9.0 | 10. 0 | 10. 0 | 13.0 | 10.0 | 10.0 | 8.0 | 9.0 | 9.0 | 9.0 |
| D-2 | 4.0 | 4.0 | 4.5 | 4.5 | 6.0 | 4.5 | 4.5 | 3.5 | 4.0 | 4.0 | 4.0 |
| D-3 | 4.0 | 2.0 | 4.5 | 4.5 | 6.0 | 4.5 | 4.5 | 3.5 | - | 1.0 | 8.0 |
| E | 0.2 | 0.2 | 0.2 | 0.2 | 0.2 | 0.2 | 0.2 | 0.2 | 0.2 | 0.2 | 0.2 |
| F | 0.4 | 0.4 | 0.4 | 0.4 | 0.4 | 0.4 | 0.4 | 0.4 | 0.4 | 0.4 | 0.4 |
| G | 0.5 | 0.5 | 0.5 | 0.5 | 0.5 | 0.5 | 0.5 | 0.5 | 0.5 | 0.5 | 0.5 |
| H | 0.2 | 0.2 | 0.2 | 0.2 | - | - | 0.2 | 0.2 | 0.2 | 0.2 | 0.2 |

### Test Example 1 : Evaluation of physical properties of molded article specimens

The physical properties of the molded article specimens prepared in Examples 1 to 4 and Comparative Examples 1 to 7 were measured according to the following methods.
- Specific gravity: measured according to ISO 1183 (23 °C)
- Fluidity (melt flow rate): measured according to ISO 1133 (265 °C, 2.16 kg)
- Tensile strength and elongation: measured according to ISO 527-1,2 (5 mm/min, 23 °C)
- Flexural strength and flexural modulus: measured according to ISO 178 (4.0 mm, SPAN 64, speed: 2 mm/min, 23 °C)
- Charpy impact strength (Izod): measured according to ISO 179/1eA (Notched, 23 °C)
- Heat deflection temperature: measured according to ISO 75 (high load: 1.82 MPa)
- Flame retardancy: measured according to UL94 V-test (V-0, 0.8 T)

Measurements were performed based on the evaluation criteria, and the results are shown in Table 2 below.

**[Table 2]**

| Classi ficati on | Exa mpl e 1 | Exa mpl e 2 | Exa mpl e 3 | Exa mpl e 4 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 |
|---|---|---|---|---|---|---|---|---|---|---|---|
| Specif ic gravit y (g/cm³) | 1.5 5 | 1.5 5 | 1.5 6 | 1.5 5 | 1.57 | 1.54 | 1.56 | 1.55 | 1.54 | 1.54 | 1.56 |
| Fluidi ty (g/10 min) | 23 | 20 | 19 | 17 | 6 | 16 | 17 | 27 | 17 | 18 | 25 |
| Tensil e streng th (MPa) | 123 | 123 | 121 | 117 | 110 | 116 | 113 | 125 | 126 | 125 | 119 |
| Tensil e elonga tion (%) | 2.5 | 2.5 | 2.4 | 2.6 | 2.3 | 2.4 | 2.4 | 2.5 | 2.5 | 2.5 | 2.3 |
| Flexur al streng th (MPa) | 191 | 192 | 189 | 182 | 176 | 185 | 176 | 196 | 195 | 194 | 186 |
| Flexur al modulu s (MPa) | 100 00 | 102 00 | 102 00 | 950 0 | 9400 | 9100 | 9550 | 9700 | 10800 | 10500 | 9800 |
| Charpy impact streng th (kJ/m²) | 7.4 | 7.5 | 7.2 | 6.9 | 6.0 | 6.6 | 6.9 | 7.2 | 7.6 | 7.5 | 6.3 |
| Heat deflec tion temper ature (high load, °C) | 203 | 204 | 203 | 205 | 2 0 | 204 | 199 | 204 | 208 | 206 | 201 |
| Flame retard ancy (0.8 T) | V-0 | V-0 | V-0 | V-0 | V-0 | V-2 | V-0 | V-2 | V-2 | V-2 | V-0 |

As shown in Tables 1 and 2, in the case of the polyester resin compositions of Examples 1 to 4 according to the present invention, impact strength, flexural modulus, and high-load heat deflection temperature were high. Thus, the molded articles manufactured using the polyester resin compositions satisfied mechanical properties, such as impact strength, tensile strength, and flexural strength, and exhibited excellent non-halogen flame retardancy and high-load heat deflection temperature. In addition, during injection, gas generation was reduced, and thus excellent product reliability and appearance could be provided.

On the other hand, in the case of Comparative Example 3 using an inorganic filler containing silica in an amount outside the range of the present invention, compared to Examples 1 to 4, tensile strength, flexural strength, and melt flow index were poor.

In addition, in the case of Comparative Examples 1 and 2 using an inorganic filler containing silica in an amount outside the range of the present invention and not using a polyethylene terephthalate resin and a hydrolysis suppressor, compared to Examples 1 to 4, mechanical properties such as tensile strength, flexural strength, flexural modulus, and impact strength were poor. In addition, melt flow index was poor. In particular, in the case of Comparative Example 1 containing an excess of an aluminum salt of diethylphosphinic acid, melt flow index was significantly reduced, resulting in poor processability.

In addition, in the case of Comparative Example 2 using an excess of a polybutylene terephthalate resin (greater than Comparative Example 1), compared to Examples 1 to 4, mechanical properties such as tensile strength, flexural strength, flexural modulus, and impact strength were poor. In addition, flame retardancy below the level of halogen flame retardancy was exhibited.

In addition, in the case of Comparative Example 4 in which the content of an aluminum salt of diethylphosphinic acid and the content of melamine cyanurate were less than the ranges of the present invention, compared to Examples 1 to 4, flame retardancy was poor.

In addition, in the case of Comparative Example 5 not including a phosphate ester as a component of a non-halogen flame retardant and Comparative Example 6 including a phosphate ester in an amount less than the range of the present invention, compared to Examples 1 to 4, flame retardancy was poor.

In addition, in the case of Comparative Example 7 including a phosphate ester in an amount exceeding the range of the present invention and including a polybutylene terephthalate resin in an amount less than the range of the present invention, compared to Examples 1 to 4, mechanical properties such as tensile elongation, flexural strength, and impact strength were poor.

That is, the polyester resin composition according to one embodiment of the present invention includes a non-halogen-based material and thus has excellent flame retardancy, rigidity, and thermal characteristics. Due to these properties, the polyester resin composition may be suitably used as a material for cooling parts. Specifically, when a molded article is manufactured using the composition of the present invention, since the halogen-free composition is used instead of a conventional material, and char and inert gas are formed on polymer surfaces, flame retardancy may be improved, and the physical property balance between mechanical properties, electrical properties, fluidity, and flame retardancy may be satisfied. In addition, excellent product reliability and appearance may be obtained.

## Claims

1. A polyester resin composition, comprising a polybutylene terephthalate resin, a polyethylene terephthalate resin, an inorganic filler, an aluminum salt of diethylphosphinic acid, melamine cyanurate, and a phosphate ester,
wherein an intrinsic viscosity of the polyethylene terephthalate resin is less than an intrinsic viscosity of the polybutylene terephthalate resin;
the melamine cyanurate is comprised in an amount of 3.8 % by weight or more based on 100 % by weight in total of the polyester resin composition; or the polyester resin composition comprises an anti-dripping agent, a heat stabilizer, a polyethylene-based lubricant, and a hydrolysis suppressor, and the melamine cyanurate is comprised in an amount of 3.8 % by weight or more based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
the phosphate ester is comprised in an amount of 1.6 to 6.9 % by weight based on 100 % by weight in total of the polyester resin composition; or the polyester resin composition comprises an anti-dripping agent, a heat stabilizer, a polyethylene-based lubricant, and a hydrolysis suppressor, and the phosphate ester is comprised in an amount of 1.6 to 6.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor; and
the inorganic filler comprises SiO₂, CaO, and Al₂O₃, wherein an amount of SiO₂ is greater than a total amount of CaO and Al₂O₃.

2. The polyester resin composition according to claim 1, wherein the polybutylene terephthalate resin and the polyethylene terephthalate resin each have an intrinsic viscosity (η) of 0.7 to 0.9 dl/g.

3. The polyester resin composition according to claim 1, wherein the polybutylene terephthalate resin is comprised in an amount of 24.8 to 41.7 % by weight based on 100 % by weight in total of the polyester resin composition; or the polyester resin composition comprises an anti-dripping agent, a heat stabilizer, a polyethylene-based lubricant, and a hydrolysis suppressor, and the polybutylene terephthalate resin is comprised in an amount of 24.8 to 41.7 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

4. The polyester resin composition according to claim 1, wherein the polyethylene terephthalate resin has a melting point of 243 to 256 °C.

5. The polyester resin composition according to claim 1, wherein the polyethylene terephthalate resin is a recycled polyethylene terephthalate resin.

6. The polyester resin composition according to claim 5, wherein the recycled polyethylene terephthalate resin is a resin obtained by processing mineral water bottles.

7. The polyester resin composition according to claim 1, wherein the polyethylene terephthalate resin is comprised in an amount of 10 to 25 % by weight based on 100 % by weight in total of the polyester resin composition; or the polyester resin composition comprises an anti-dripping agent, a heat stabilizer, a polyethylene-based lubricant, and a hydrolysis suppressor, and the polyethylene terephthalate resin is comprised in an amount of 10 to 25 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

8. The polyester resin composition according to claim 1, wherein the inorganic filler comprises 50 to 55 % by weight of SiO₂, 15 to 21 % by weight of Al₂O₃, and 13 to 19 % by weight of CaO.

9. The polyester resin composition according to claim 1, wherein the inorganic filler is comprised in an amount of 20 to 40 % by weight based on 100 % by weight in total of the polyester resin composition; or the polyester resin composition comprises an anti-dripping agent, a heat stabilizer, a polyethylene-based lubricant, and a hydrolysis suppressor, and the inorganic filler is comprised in an amount of 20 to 40 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

10. The polyester resin composition according to claim 1, wherein the aluminum salt of diethylphosphinic acid is comprised in an amount of 8.6 to 11.9 % by weight based on 100 % by weight in total of the polyester resin composition; or the polyester resin composition comprises an anti-dripping agent, a heat stabilizer, a polyethylene-based lubricant, and a hydrolysis suppressor, and the aluminum salt of diethylphosphinic acid is comprised in an amount of 8.6 to 11.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

11. The polyester resin composition according to claim 1, wherein the melamine cyanurate is comprised in an amount of 3.8 to 5.2 % by weight based on 100 % by weight in total of the polyester resin composition; or the polyester resin composition comprises an anti-dripping agent, a heat stabilizer, a polyethylene-based lubricant, and a hydrolysis suppressor, and the melamine cyanurate is comprised in an amount of 3.8 to 5.2 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

12. The polyester resin composition according to claim 1, wherein the polyester resin composition comprises an anti-dripping agent, a heat stabilizer, a polyethylene-based lubricant, and a hydrolysis suppressor, and each of the anti-dripping agent, the heat stabilizer, the polyethylene-based lubricant, and the hydrolysis suppressor is comprised in an amount of 0.1 to 10 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor.

13. The polyester resin composition according to claim 1, wherein the polyester resin composition has a high-load heat deflection temperature of 190 °C or higher as measured under 1.82 MPa according to ISO 75, and has a flexural strength of 180 MPa or more and a flexural modulus of 8,000 MPa or more as measured at a rate of 2 mm/min using a 4.0 mm specimen and SPAN 64 according to ISO 178.

14. A method of preparing a polyester resin composition, comprising kneading and extruding a polybutylene terephthalate resin, a polyethylene terephthalate resin, an inorganic filler, an aluminum salt of diethylphosphinic acid, melamine cyanurate, and a phosphate ester,
wherein an intrinsic viscosity of the polyethylene terephthalate resin is less than an intrinsic viscosity of the polybutylene terephthalate resin;
the melamine cyanurate is comprised in an amount of 3.8 % by weight or more based on 100 % by weight in total of the polyester resin composition; or the polyester resin composition comprises an anti-dripping agent, a heat stabilizer, a polyethylene-based lubricant, and a hydrolysis suppressor, and the melamine cyanurate is comprised in an amount of 3.8 % by weight or more based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
the phosphate ester is comprised in an amount of 1.6 to 6.9 % by weight based on 100 % by weight in total of the polyester resin composition; or the polyester resin composition comprises an anti-dripping agent, a heat stabilizer, a polyethylene-based lubricant, and a hydrolysis suppressor, and the phosphate ester is comprised in an amount of 1.6 to 6.9 % by weight based on 100 % by weight in total of a polybutylene terephthalate resin, a polyethylene terephthalate resin, an inorganic filler, an aluminum salt of diethylphosphinic acid, melamine cyanurate, a phosphate ester, an anti-dripping agent, a heat stabilizer, a polyethylene-based lubricant, and a hydrolysis suppressor;
the inorganic filler comprises SiO₂, CaO, and Al₂O₃, wherein an amount of SiO₂ is greater than a total amount of CaO and Al₂O₃; and
the polyethylene terephthalate resin is a recycled resin.

15. A molded article, comprising the polyester resin composition according to any one of claims 1 to 13.
